# EUROPEAN PATENT SPECIFICATION

(11) **EP 1 422 341 B1**
(45) Date of publication and mention of the grant of the patent: **11.11.2009**
(21) Application number: 04075178.6
(22) Date of filing: 25.07.2000
(51) Int. Cl.: D21G 1/02, F16C 13/00

(54) **Method of forming a roll**
Verfahren zum Herstellen einer Rolle
Procédé pour fabriquer un rouleau

(30) Priority: 28.07.1999 US 362430; 28.07.1999 US 363328
(43) Date of publication of application: 26.05.2004
(62) Divisional of application: 00306338.5
(73) Proprietor: Advanced Materials Corporation, Lester, Pennsylvania 19113-20004 (US)
(72) Inventor: Rodal, Jose J.A., Davidson North Carolina 28036 (US); Shieh, Yang T., Wallingford Pennsylvania 19086 (US); Valeer, Erik, Redwood City California 94062 (US)
(74) Representative: Moore, Christopher Mark

(56) References cited:
- WO-A-94/09208
- WO-A-98/54405
- US-A- 3 599 306
- US-A- 3 616 070
- US-A- 4 242 783
- US-A- 5 091 027
- US-A- 5 753 165
- US-A- 5 785 636

## Description

This application is a divisional application of European patent application number 00306338.5, published as EP 1072725.

The invention relates to a method of forming roll device useful in calendering and like processes.

Calendering is the act of pressing a material, e.g., cloth, rubber, plastics or paper, between rollers or plates in order to smooth or glaze or to thin into sheets. Rolls of this invention are known as calender rolls, soft-nip calender rolls and supercalender rolls and are used in paper mills. In a typical paper mill, large numbers of rolls are used not only for transporting the web sheet which becomes paper, but also for calendering or processing the web sheet into a specific grade of paper.

Known calender rolls comprise a metal cylinder having a cotton-filled or a thermoset composite layer cover. Cotton filler material is not sufficiently tough to withstand the high stress, high impact requirements and high temperatures that are associated with demanding applications such as in modern paper fabrication. Paper mills must frequently regrind and replace cotton-filled roll covers, even when they perform well. This results in significant production down-time and the high costs of replacement rolls in inventory.

Synthetic composite roll covers are based on a thermoset resin such as epoxy, rubber or polyurethane, as a base material which is a reinforcement material to improve strength.

One synthetic composite roll cover is a single layer of reinforcement fibre mat impregnated with a thermoset epoxy which is then cured. The surface of the cured single layer is then machined to a smooth finish in accordance with customer specifications. Altematively, an additional layer of reinforcement fibre mat may be added over the cured single layer, the additional layer being impregnated with an epoxy which is then cured to form a top layer. The surface of the cured top layer is then machined. In practice, a layer of the synthetic composite cover is applied to the roll core by unspooling a strip of dry reinforcement fibre mat, several centimetres in width, from a reel and conveying the unspooled strip through an epoxy bath. The roll core is oriented horizontally and rotated to wind the epoxy impregnated strip onto the roll core helically in reciprocal fashion over the roll core length until a desired thickness is reached. The epoxy is then allowed to cure to form a layer which is then machined to a smooth finish.

Synthetic composites such as those based on thermosetting epoxies also suffer from several drawbacks. For example, to formulate a synthetic composite roll cover having certain desirable properties such as high toughness, high temperature capability, i.e., high glass transition temperature (T_{g}), it is usually necessary to employ a high concentration of reinforcement fibres. Increasing the concentration of reinforcement fibres can result in easier delamination, greater brittleness, and poor bonding between the cover and the metal core surface. Synthetic composite roll covers today are best performing at operating conditions wherein the maximum operating temperature does not considerably exceed about 120°C (about 250° F), and the maximum nip pressure does not considerably exceed 690 bar (10,000 p.s.i.), and wherein the surface roughness of the cover is considerably below 0,25 Ra µm (10 Ra micro-inches).

WO 98/54405 A1 discloses a thermoplastic-coated roll, which thermoplastics is reinforced with continuous fibres. A primer and adhesive layer is spread onto a roll body, the body oriented horizontally and a fibre-reinforced thermoplastics coating is applied thereto. Optional filter materials such as kaolin, mica or 'broken-fibre' reinforcement may be present.

EP 01041197 A1 discloses a roll core which is formed by winding a length of polymer impregnated fibres onto a horizontal metal core, the polymer being either a thermoset or thermoplastics polymer.

US-A- 3616070 discloses a method of forming large wall or shell-like structures.

It is one object of the invention to provide a method of forming roll device having an improved cover.

The known method of coating, wherein an epoxy impregnated strip is helically wrapped over a horizontally disposed roll core, is unsuitable for the application of a thermoplastic material because the thermoplastic extrudate alone would have insufficient viscosity to form a cover when applied to a horizontally disposed roll core.

According to the invention in a first aspect there is provided a method of forming a roll device for use in calendaring, the method comprising the steps of:
a) mounting a generally cylindrical roll core such that its principal axis is vertical;
b) extruding thermoplastics material having fibre reinforcement disposed therein from an extrusion head on to the roll core to form a cover,
c) allowing said extruded thermoplastics material to cool,
wherein said fibre reinforcement consists of discrete, randomly-oriented fibres.

The thermoplastic material may be selected from a wide variety of material. Preferably the thermoplastics material is one or more of:
polyetherimide,
polyethersulfone,
polyphenylene sulfide,
polyetheretherketone or
polyphenylene oxide.

In one preferred aspect the thermoplastic material comprises an inner layer comprising a thermoplastic material having a high fibre concentration and an outer layer comprising a thermoplastic material having a fibre concentration lower than that of the inner layer.

Preferably the concentration of fibre in the inner layer is between 10% and 40% by weight.

Preferably the concentration of fibre in the outer layer is 0% to 20% by weight of glass fibre and/or 0 to 15% of aramid fibre and/or 0% and 20% by weight of carbon fibre.

Preferably the fibres are one or more of glass fibres, carbon fibres, or aramid fibres.

In one preferred aspect the device comprises a fibre mat made of fibres in a set thermoset resin.

The cylinder can be made of metallic or non-metallic such as plastics or paper.

Preferably the method includes the preliminary step of wrapping a dry reinforcement mat over the outer surface of the core.

Preferably the method further includes machining the cooled surface of the thermoplastics material to a pre-determined smoothness.

In order that the invention may be well understood it will be described by way of example with reference to the accompanying drawings wherein:
Fig. 1 is a top view of one embodiment of apparatus which may be used in the method of the invention
Fig. 2 is a sectional view taken along line 2-2 on Fig. 1;
Fig. 3 is a sectional view taken along line 3-3 on Fig. 2;
Fig. 4 is an enlarged sectional view taken along line 4-4 on Fig. 2;
Fig. 5 is an isometric view of the motor driven elevator assembly in the apparatus of Figure 1;
Fig. 6 is a sectional view taken along lines 6-6 on Fig. 2;
Fig. 7 is a sectional view taken along lines 7-7 on Fig. 2;
Fig. 8 is an isometric view of a mold tape useful in the method of the present invention;
Fig. 9 is a partial sectional view of a metal roll core useful in the method of the invention being covered by apparatus usefully in carrying out the method of the invention;
Fig. 9a is an enlarged view of a three-tier mold tape assembly helically wound useful in the method of the invention;
Fig. 9b is an enlarged view of a two-tier mold tape assembly helically wound useful in the method of the invention;
Fig. 10 is a sectional view taken along line 10-10 on Fig. 9;
Fig. 10a is a sectional view of a metal roll core covered with a polymeric material only, in a method of the invention;
Fig. 11 is a sectional view taken along line 11-11 on Fig. 9;
Fig. 12 is a side view of a mold tape fabricating apparatus useful to fabricate a mold tape for use in the method of the invention;
Fig. 13 is an enlarged sectional view taken along line 13-13 on Fig. 12;
Fig. 14 is an isometric view of a two-part alignment of the mold tape fabricating apparatus of Fig. 12;
Fig. 15 is an enlarged sectional view taken along line 15-15 on Fig. 12;
Fig. 16 is an isometric view of a three-tiered mold tape assembly useful to fabricate a mold tape for use in the method of the invention;
Fig. 17 is a side view of the spot welding shoe of the mold tape fabricating apparatus of Fig. 12;
Fig. 18 is an enlarged sectional view taken along line 18-18 on Fig. 17;
Fig. 19 is an isometric view of the bottom portion of a metal roll core with a dry reinforcement fibre mat of the invention;
Fig. 20 is an isometric view of the dry glass fibre mat under layer of the invention;
Fig. 21 is a sectional view demonstrating wrapping of a dry glass fibre mat under layer to the metal roll core using a carrier mat in a method of the invention;
Fig. 22 is a cross-sectional view of a metal roll core with the dry glass fibre mat under layer of the invention;
Fig. 23 is a partial sectional view of one embodiment of a roll core of the invention;
Fig. 24 is a sectional view taken along line 24-24 on Fig. 23;
Fig. 25 is a sectional view taken along line 25-25 on Fig. 23;
Fig. 26 is a sectional view of one end portion of a covered roll core of the invention;
Fig. 27 is a side view of a roll core of the invention;
Fig. 28 is a side view of a roll core of the invention within a lathe; and
Fig. 29 is an isometric view of a finished roll core of the invention.

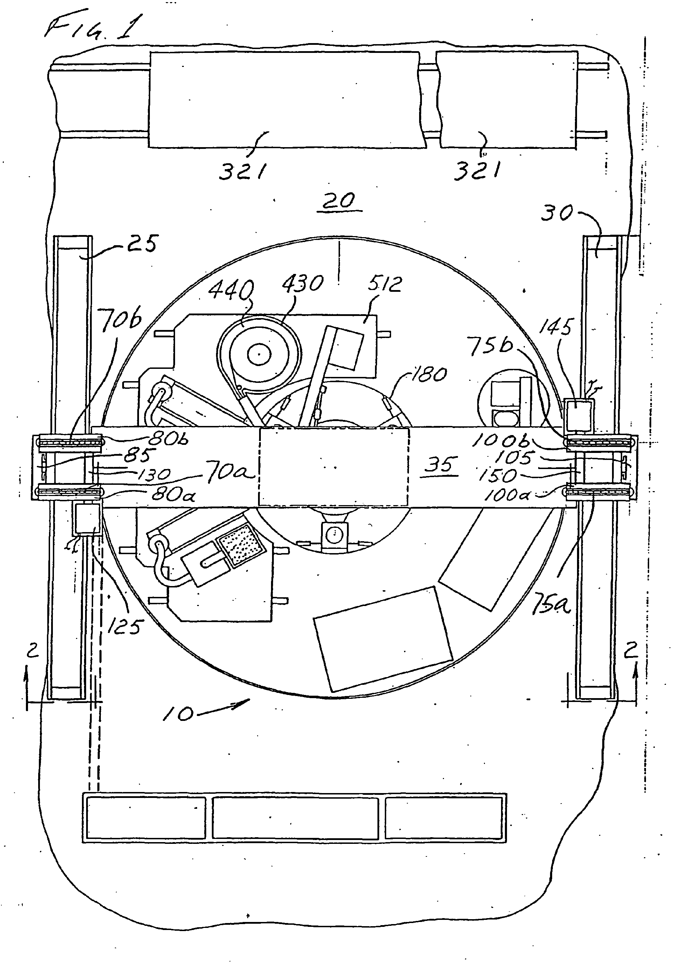

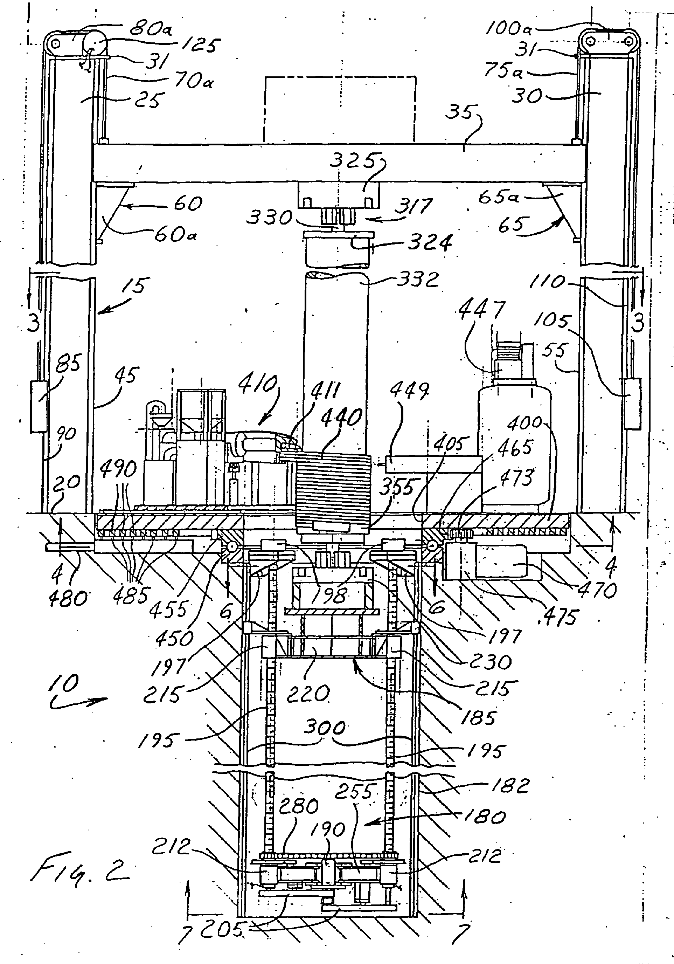

As shown in Figs. 1 and 2, the apparatus 10 comprises a main frame assembly 15 that comprises a base portion 20 and a horizontal cross member 35 located between a pair of side frame members 25 and 30 for vertical reciprocal movement relative to the base portion 20. Each side frame member 25 and 30 may be of any suitable height, e.g., 12m (40 ft), and may be steel I-beams. The cross member 35 is formed of a box section beam. As shown, the side frame member 25 includes an inner face 40 having precision linear longitudinal tracks 45 and the side frame member 30 has an inner face 50 having the same linear tracks 55. Bracket assemblies 60 and 65 located at each end of the bottom surface of the transverse frame member 35. Bracket assembly 60 includes a web portion 60a that includes guide bearings (not shown) disposed over tracks 45 to enable sliding attachment of the member 35. Bracket assembly 65 includes a web portion 65a having bearings disposed over the precision linear tracks 55 to enable sliding attachment of the frame member 35 to the tracks 55. The cross member 35 may thus be moved vertically from an elevated position near the top of the side frame members 25 and 30 downwardly to a lowered position near the bottom of the side frame member 25 and 30. A limit stop 31 is present at the top to limit further upward movement.

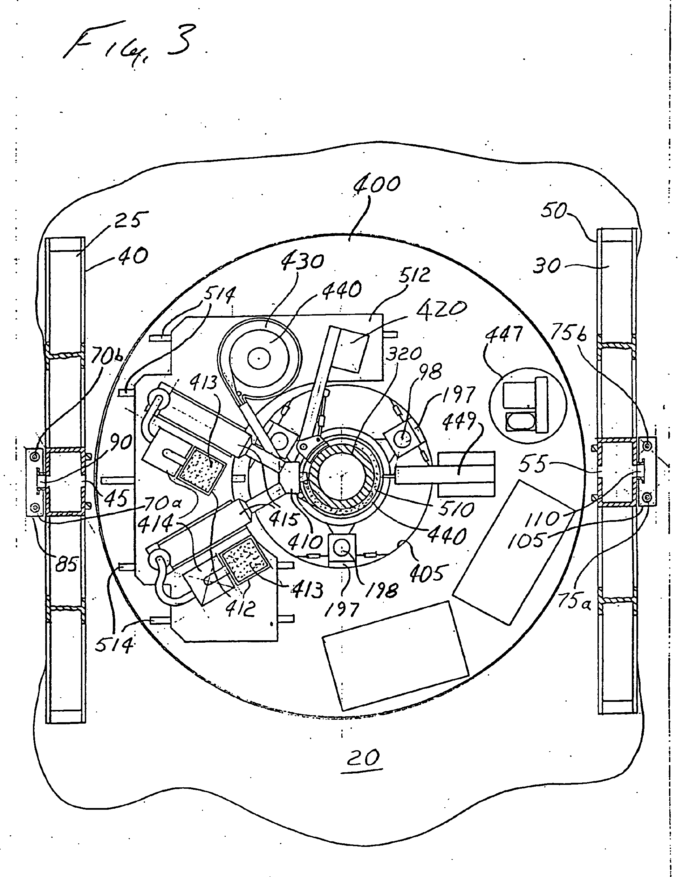

The main frame assembly 15 includes a counterweight assembly which includes a pair of roller chains 70a and 70b attached at one end to the cross member 35. The roller chains 70a and 70b extend over assemblies 80a and 80b, respectively, each comprising a pair of roller chain sprockets located at the top of the side frame member 25 and attached at their opposite ends to a counterweight 85. As best shown in Fig.3, the counterweight 85 travels along a longitudinal rail 90 on the outer face of the side frame member 25. A pair of roller chains 75a and 75b extends over assemblies 100a and 100b, each comprising a pair of roller chain sprockets located at the top of the side frame member 30. The roller chains 75a and 75b are attached at their opposite ends to a counterweight 105 which, like counterweight 85, travels on a longitudinal rail 110 (Fig. 3).

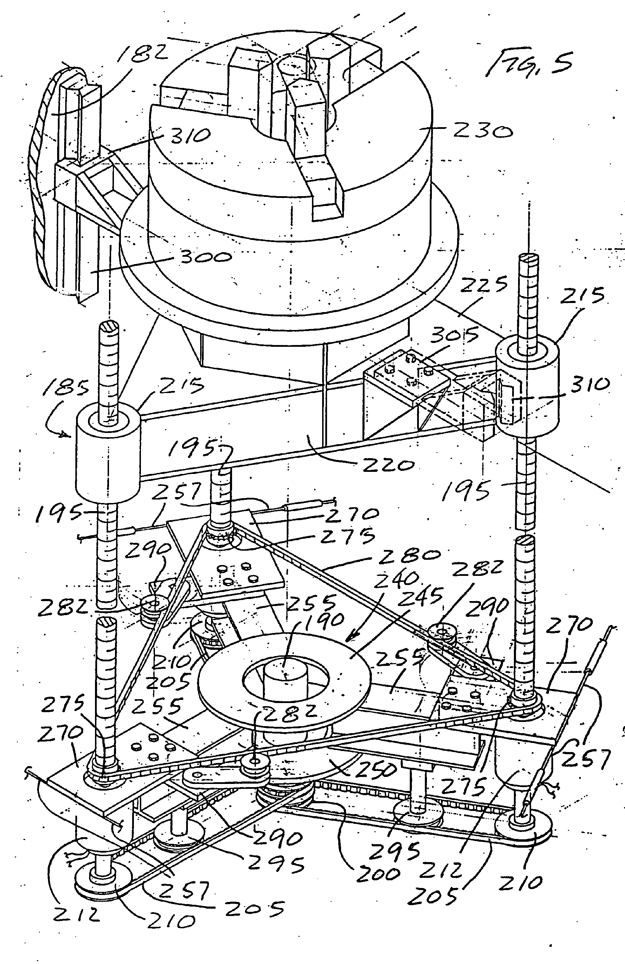

An electric drive assembly 145 is drivingly connected to one of the roller chain sprockets at 1 00b at the top of the side frame member 30 to raise cross member 35. The electric drive assembly 145 comprises an electric motor in communication with a gear reducer (not shown) through a clutch brake (not shown) which is drivingly connected to one of the roller chain sprockets within the assembly 100b. This in turn is connected to a roller chain sprocket within the assembly 100a through a drive axle 150. Thus, through its connection with roller chain sprockets located within both assemblies 100a and 1 00b, the electric drive assembly 145 drives the roller chains 75a (best shown in Fig. 2) and 75b (shown in Fig. 3 only) which connect to cross member 35 at one end and to the counterweight 105 at the other end. A similar electric drive assembly 125 is drivingly connected to one of the roller chain sprockets within assembly 80a at the top of the side frame member 25. The motor driven roller chain sprocket within the assembly 80a is connected to a roller chain sprocket within the assembly 80b through a drive axle 130. Thus the electric drive assembly 125 drives the roller chains 70a and 70b which connect to cross member 35 at one end and to the counterweight 85 at its opposite end. The drive assemblies 125 and 145 to operate in synchronization. One of the drive assemblies, i.e., drive assembly 125, could be replaced by a light-weight torque tube having right-angle gear box at opposite ends (not shown). At one of its ends, the torque tube could be connected to a right-angle gear box, the output of which is connected to the roller chain sprocket within assembly 100a. The torque tube extends above the cross member 35 from the side frame member 30 to the side frame member 25. At its opposite end, the torque tube drives the other right-angle gear box which is connected to a roller chain sprocket within assembly 80a. In this manner, the need for a second, simultaneously driven, drive assembly 125 is eliminated. Thus, through the torque tube (not shown) and drive axles 130 and 150, raising and lowering of the cross member 35 may be accomplished in a balanced and synchronized manner utilizing the single drive assembly 145. Because of counterweights, the electric drive assembly 145 needs to exert only a small amount of lifting force to raise the cross member 35. Referring again to Figs. 1 and 2, the base portion 20 has a central cylindrical opening 180 which has a vertical wall 182 formed of any suitable material, e.g., a steel cylinder 2.5cm. (one-inch) in thickness. The vertical wall 182 may be waterproof. The central opening 180 may be sufficiently large to house a motor driven elevator assembly 185 (Fig. 5) located therein, e.g. 13.2 mm (44 ft) deep and 2.1 m (7 ft) in diameter. Referring now to Fig. 5, the motor driven elevator assembly 185 comprises a motor 190 connected to a gear reducer 212, the output shafts of which are connected to threaded ball screw shafts 195. Each ball screw shaft 195 is affixed adjacent the vertical wall 182 and is suspended therefrom within the central opening by a bracket 197 (Fig.2). The opposite driven end of each ball screw shaft 195 suspends freely within the central opening 180. As best shown in Fig. 2, each ball screw shaft 195 is mounted within a bearing housing 198 that permits rotational movement of the ball screw shaft 195.

Referring again to Fig. 5, the motor 190 is provided with a drive pulley 200 that extends below the motor 190 and continuous loop drive timing belts 205 extend thereover. The drive timing belts 205 also extend over timing belt sprockets 210 to enable synchronous rotation of the ball screw shafts 195. A gear reducer mechanism 212 is provided between each timing belt sprocket 210 and each ball screw shaft 195 reducing the revolutions per minute from the timing belt sprocket 210 to the ball screw shaft 195.

As best shown in Fig. 5, is an internally threaded ball nut element 215. The moveable ball nut elements 215 are affixed at the corners of a generally triangular platform assembly 220 comprising a horizontal plate 225 on which an upwardly facing universal chuck 230 is secured and for receiving the bottom end of the roll core. Thus, upon motor driven synchronous rotation of the ball screw shafts 195 in one direction, the platform assembly 220 is caused to move upwardly and rotation in the opposite direction lowers the platform assembly 220. Like the cross member 35, the platform assembly 220 passes through the central opening 180 from an elevated position wherein the ball nut elements 215 are located near the top of the ball screw shafts 195 adjacent the brackets 197 to a lowered position wherein the ball nut elements 215 are just above chain sprockets 275.

The motor 190 housed at the center of a frame assembly 240 comprises a central portion formed of two circular plates 245 and 250 each having a central opening in which the motor 190 is disposed. The frame assembly 240 also comprises arms 255 that extend radially at 120° intervals from the central portion. Each arm 255 is formed of a steel I-beam and secured at its proximal end to the central portion by welding. Plate 245 is secured to the top surface of the arms 255 and circular plate 250 is secured to the bottom surface. A bracket 270 is bolted at the distal end of each arm 255 to the top surface thereof.

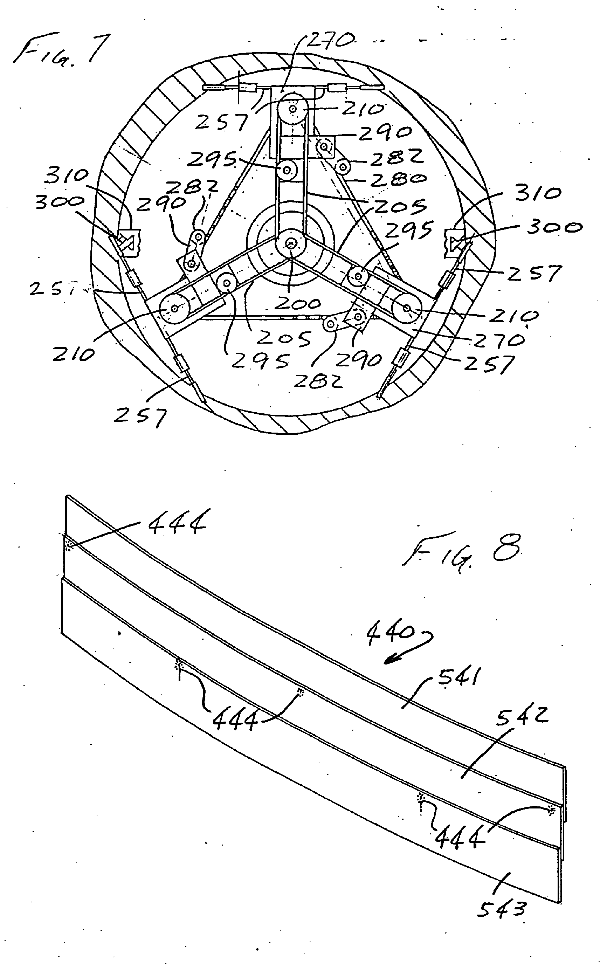

Referring now to Figs. 5 and 7, the entire frame assembly 240 is secured to the vertical wall 182 by anchoring rods 257, each rod having a threaded portion and an internally threaded turnbuckle. Each anchoring rod 257 comprises a first end attached to the bracket 270 at the distal end of each arm 255 and a second end attached to the vertical wall 182 of the opening 180. As best shown in Fig. 7, the anchoring rods 257 are arranged in pairs and are oriented tangentially with respect to the direction of rotational movement of the electric motor 190 for the purpose of reducing swinging and vibrations resulting during operation of the electric motor 190 while allowing for thermal and load induced length changes of the ball screw shafts 195.

Each bracket 270 has an internal bore through which one of the ball screw shafts 195 is disposed. Each ball screw shaft 195 is provided with an additional chain sprocket 275 located just above each bracket 270. A continuous safety chain 280 extends over the chain sprockets 275. The safety chain 280 assures continued rotation of the ball screw shafts 195 in a synchronized manner in the event of a drive timing belt 205 failure during operation of the apparatus 10. A plate 290, secured between each bracket 270 and the top surface of each arm 255, serves as a mounting surface for a tensioning roller assembly 282 for the safety chain. Similarly, roller assemblies 295 extend downwardly from the bottom surface of arms 255 to provide tensioning to the drive timing belts 205.

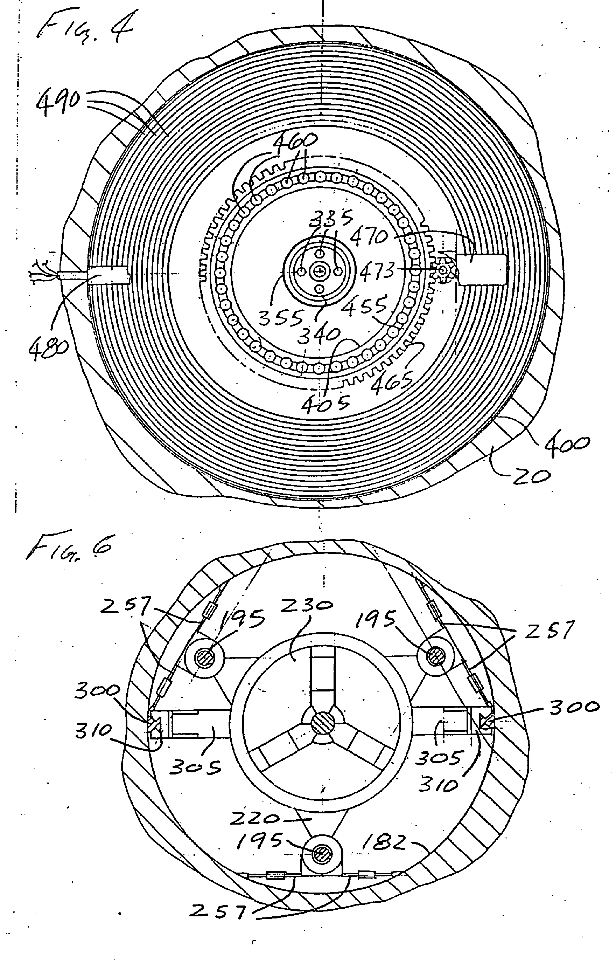

As best shown in Figs. 5 and 6, opposite linear guide rails 300 are disposed vertically on the wall 182 of the opening 180. Bracket assemblies 305 secured to opposite ends of the triangular platform assembly 220 include linear bearings 310, each linear bearing being disposed over each linear guide rails 300 to enable vertical sliding movement of each linear bearing over the length of the guide rails 300. Attachment of the triangular platform assembly 220 to the guide rails 300 in this manner prevents rotational and lateral movement of the platform assembly 220 during raising and lowering.

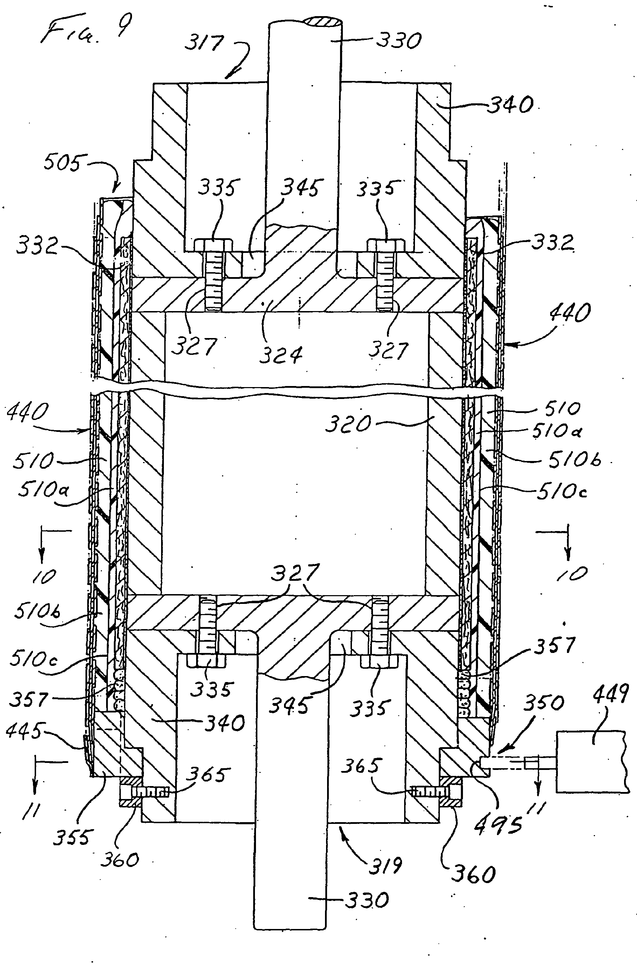

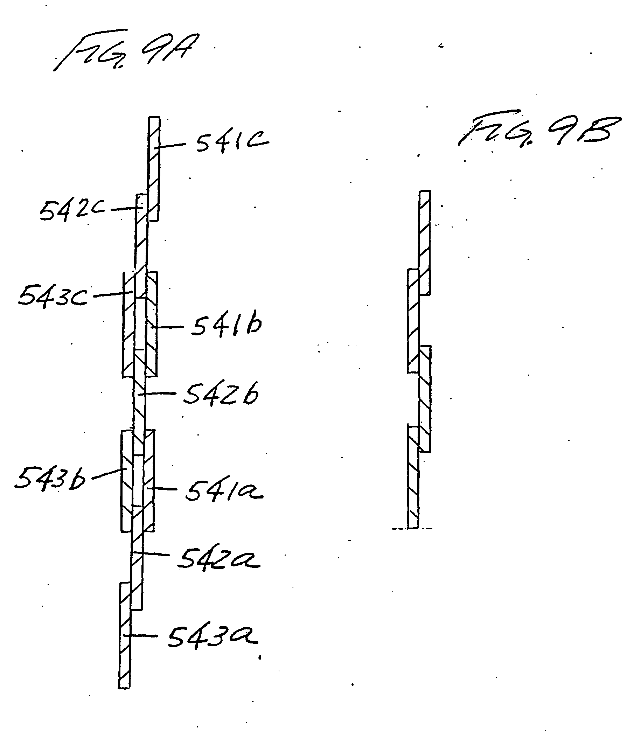

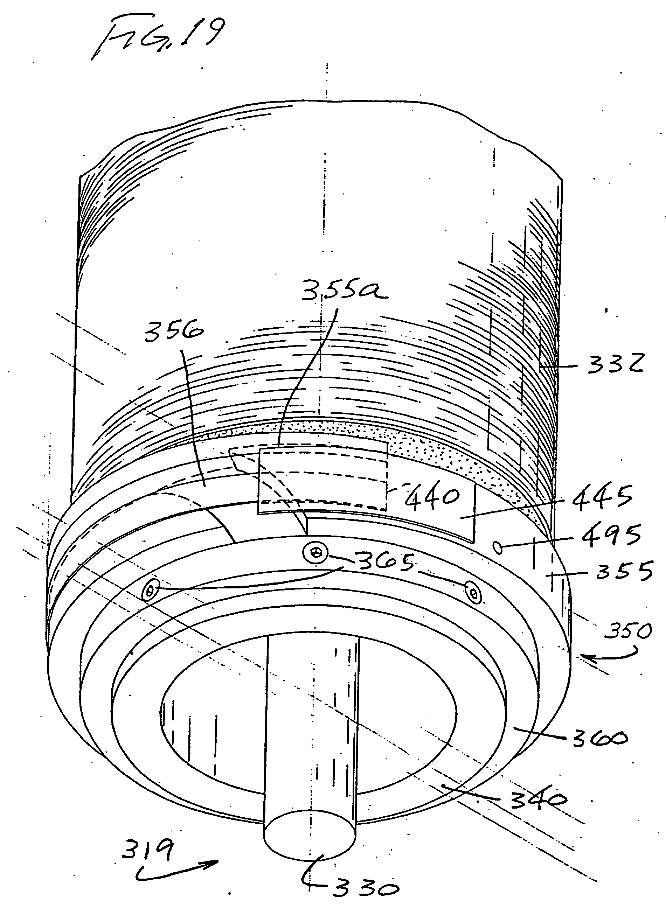

As best shown in Fig. 9, the metal roll core 320 has end caps 324 which include journals 330 that are concentric with the central axis of the metal roll core 320 and aid reception of the core 320 in chucks 230 and 325. The end caps 324 have threaded openings 327 for extension segments 340 attached thereto by bolts 335. Each extension segment 340 has a circumference approximately equal to that of the roll core and a central opening 345 for the extension segment 340 to be fitted over the journal 330 for attachment of the extension segment 340 the end cap 324. A gasket (not shown) may be inserted between the extension segment 340 and the end cap 324 to assure an airtight seal therebetween. Further, a spacer assembly 350 is attached to the bottom end 319 of the roll core 320 over the segment 340 located thereon. As best seen in Figs. 9 and 19, the spacer assembly 350 comprises a spacer ring 355 and a locking ring 360. The spacer ring 355 has an outer circumference that is larger than that of the roll core 320 and is slidably mounted over the extension segment 340 by a locking ring 360. As best shown in Fig. 9, the spacer ring 355 is abutted against the extension segment 340 and the locking ring 360 abuts the spacer ring 355 and is secured to the extension segment 340 by bolts 365. The spacer ring 355 may thus slidably rotate concentrically about the extension segment 340.

Referring again to Fig. 19, the spacer ring 355 includes a slightly inclined top surface 355a which extends approximately one revolution around the roll core to form a ramp. The incline over the entire length of the top surface 355a, e.g., 12mm (0.50 inches), is based upon the rate of downward movement of the roll core 320, e.g., 12mm (0.50 inches) per rotation of a turntable 400. The spacer ring 355 has an opening 356 through which roll cover material may be extruded while start-up adjustments are made to the extruder in a manner to be discussed in detail below.

Referring now to Figs. 2 and 3, the apparatus 10 also includes a turntable 400 which has a central circular opening 405, concentric with, and substantially equal in diameter to the central opening 180 in the base portion 20. As a result, when secured between chucks 325 and 230, the roll core 320 may be lowered from an elevated position, wherein the entire roll core 320 including its bottom end 319 thereof is disposed above the base portion 20 and turntable 400, to a lowered position wherein the roll core length 320 is disposed within the central opening 405 of the turntable and within the central opening 180 of the base portion.

Referring now to Figs. 2 and 4, the turntable 400 is rotatably mounted on the base portion 20 of a race assembly that includes an upper race 455 (best shown in Fig. 4) attached to the underside of the turntable 400 and a lower fixed race 450 (best shown in Fig. 2) that is attached to a portion of the base portion 20. Together, the lower and upper races form a raceway in which ball bearings 460 to rotate the turntable 400 over the base 20. The center of rotation of the turntable is aligned with the central axis of the chuck assemblies 325 and 230. Referring again to Fig. 2, a motor 470, having an associated gear reducer 475, is mounted on a surface of the base portion 20 below the turntable 400. The motor 470 is drivingly connected to the turntable 400 via a gear reducer gear wheel 473 with a ring gear 465 integral to the upper race 455 (best shown in Fig. 4) located on the underside of the turntable 400. Thus, the motor 470 and its associated gear reducer 475 control rotational movement of the turntable 400.

In Figs. 2 and 3, several devices are shown mounted on a platform 512 that is moveably secured within a plurality of elongated slots 514 located on the turntable 400. These devices include an extruder assembly 410, an induction heater assembly 420, a mold tape dispenser 430 for dispensing a length of mold tape 440 spooled thereon, a pin indexing device 449 and other devices to be discussed below. The platform 512 may be moved along the elongated slots 514 to adjust the distance of the platform mounted devices from the roll core to enable the thickness of the filament 510 to be adjusted prior to application to the dry glass fibre mat layer 332 applied previously. In other words, the adjustable platform 512 allows radial positioning of the equipment in reference to the radial dimension of the roll core. Alternatively, these devices could be mounted directly to the turntable. The turntable 400 enables movement of these devices in a circular path around the roll core 320 while the roll core is lowered from its elevated position so that a layer of polymeric material or filament may be added over the dry glass fibre mat layer 332 applied previously. The extruder assembly 410 operates in known manner and comprises bins 412, e.g., two, having pelletised polymeric material 413. The pelletised polymeric material 413 falls by gravity from each bin 412 into a hopper 414 from which it is transported into an extruder 415. Each extruder 415 extrudes the polymeric material into a common feeding head 411 (best shown in Figs. 2 and 3) which applies a filament 510 of the polymeric material to the roll core outer surface 322.

Because the feeding head 411 is common to several extruders 415, several different polymeric materials each having a different amount of filler or additive may be combined in the feeder head 411 and applied to the dry fibre mat layer 332 to form a polymeric filament 510 comprised of several discrete layers, each layer having different mechanical properties. For example, one of the bins 412 may be loaded with pelletized thermoplastic material 413 having a low fibre concentration (or no fibre content) while the other is loaded with pelletized thermoplastic material 413 having a higher fibre concentration. The fibres being utilized may be glass fibres, carbon fibres and/or aramid fibres. In this manner, the two different thermoplastic materials converge in the feeding head 411 to form an extrudate which is a dual layer filament 510 comprising a thermoplastic linear layer or under stock 510a having a higher fibre content and an outer layer or a top stock 510b having a lower fibre content (or no fibre content). The higher fibre content in the thermoplastic under stock 51 0a lowers the coefficient of thermal expansion of this layer to a level closer to that of the metal surface 322 of the roll core thus resulting in minimizing residual stresses upon hardening. For example, a recommended amount of glass, carbon or aramid fibre employed in the understock is 10-40% by weight of those fibres. Employing a higher fibre content in the under layer 510a improves toughness, increases thermal conductivity, thermal stability and impact resistance and minimizes residual stresses upon hardening. The lower fibre concentration of the top stock 510b of the filament 510 results in a softer and smoother outer surface which provides desired operating characteristics. For example, if glass fibre is employed in the top stock 51 0b, a recommended amount is 0-20% by weight glass fibre and preferably 10%. If aramid fibre such as Kevlar fibre is employed in the top stock, a recommended amount is 0-15% by weight Kevlar fibre and preferably 8-9%. If carbon fibre is employed in the top stock 510b, a recommended amount is 0-20% by weight carbon fibre and preferably 10%. Alternatively, both the under stock 510a and the top stock 510b may be formed of thermoplastic material having the same composition including fibre content. Additives other than fibres may be added to the thermoplastic material to change the mechanical properties of the layers.

The filament may be made of many different polymeric materials including high performance thermoplastic materials and thermosetting materials. Representative thermoplastic materials are polyetherimide or polyethersulfone, polyphenylene sulfide, polyphenylene oxide, or polyetheretherketone. Other materials include polyurethane and epoxy which may be applied to the dry fibre mat outer surface 332.

As best shown Figs. 2 and 4, electrical power and control signal communication for the turntable-mounted devices are provided from an outside source through cables 480 which are in communication with conductive brushes 485 which are in electrical contact with a respective concentrically mounted slip rings 490 disposed on the underside of the turntable 400 (also shown in Fig. 4). In this manner, electricity is conducted from the slip rings up through the turntable 400 to provide continuous electrical power and process control to the turntable mounted devices while the turntable is stationary and while the turntable is rotating.

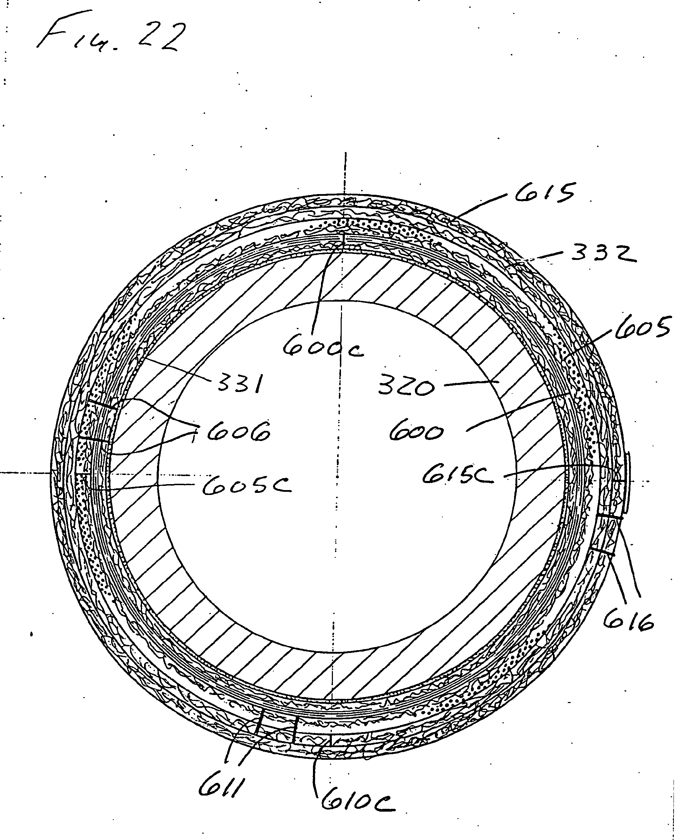

The process of wrapping the glass fibre mat layer 332 over the roll core outer surface 322 and for extruding polymeric material 510 over the glass fibre mat layer 332 will now be described. First, after any used cover material is physically removed and the roll core outer surface 322 is thoroughly cleaned e.g. using known solvents and solutions. After the degreasing, the extension segments 340 are secured to the ends of the roll core 320. The entire roll core outer surface 322 with the extension segments 340 is shot blasted. After shot blasting, a chemical solution is brushed on to facilitate oxidation of the outer surface 322 to enhance its adhesion with epoxy which will be applied as a primer, or infused into the glass fibre mat layer 332 later in the process when it is decided not to utilize a primer. Next, a layer of liquid epoxy primer 331 (Fig. 22) is applied over the entire outer surface of the roll core 320 to enable adhesion with the dry glass fibre mat 332 which is wrapped thereover.

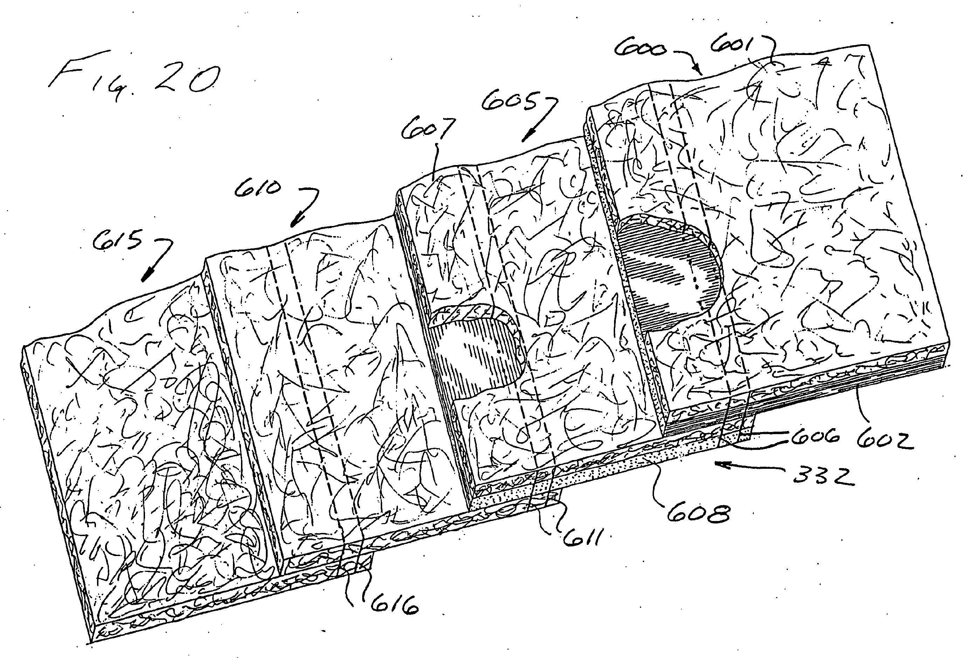

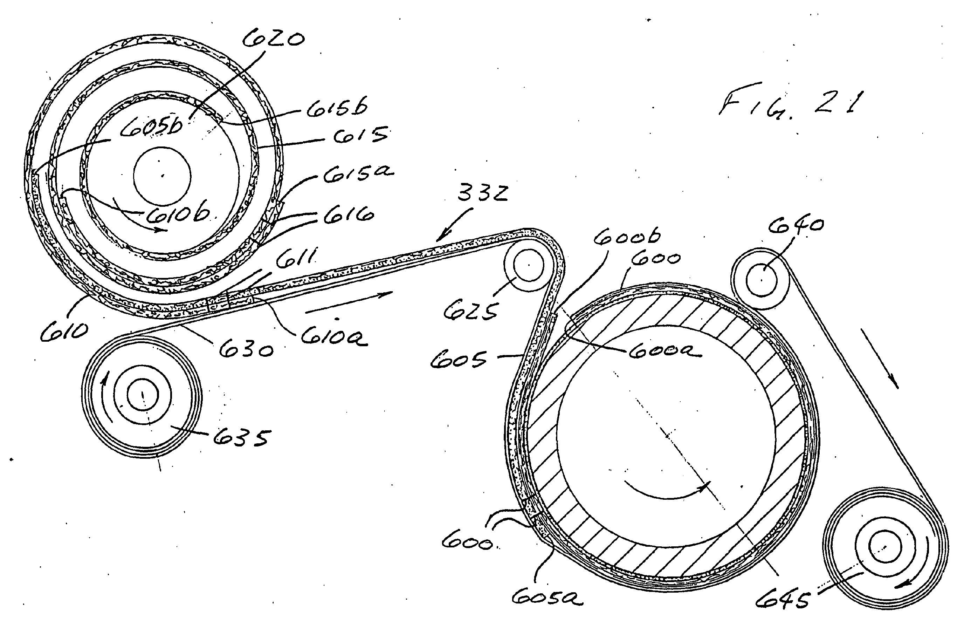

Referring now to Figs. 20 and 21, the glass fibre mat 332 comprises layers of glass fibre material including an inside layer 600, a second layer 605, a third layer 610 and an outside layer 615. As best shown in Fig. 21, the second layer 605 is affixed near its leading edge 605a to the inside layer 600 by any suitable means, e.g., stitches 606, located approximately one quarter along the length of the inside layer 600 from the leading edge 600a thereof to form a seam. Likewise, the third layer 610 is affixed near its leading edge 610a to the second layer 605 by any suitable means, e.g., stitches 611, located approximately one quarter along the length of the second layer 605 from the leading edge 605a thereof to form a seam. Finally, the outside layer 615 is affixed near its leading edge 615a to the third layer 610 by any suitable means, e.g., stitches 616, located approximately one quarter along the length of the third layer 610 from the leading edge 610a thereof to form a seam.

As best shown in Fig. 21, the roll core is oriented horizontally for the wrapping of the dry glass fibre mat 332 thereon. The glass fibre mat 332 is applied over the roll core outer surface tightly under high pulling tension in a dry condition and without the addition of any epoxy resin thereto. It is not until after the polymeric layer 510 is wound over the mat 332 and allowed to cool to appropriate temperature thereon that liquid epoxy resin is infused through the polymeric layer 510 and into the dry glass fibre mat 332 and allowed to cure therein. The manner for infusing the epoxy resin will be explained in detail below.

The leading edge 600a of the inside layer 600 is first applied to the epoxy primed roll core outer surface 322. The dry glass fibre mat 332 is unwound from a spool 620 and conveyed over a roller 625 and tightly wrapped onto the roll core outer surface 322. Simultaneously, a length of carrier material 630, e.g., paper, wound on a dispensing roller 635 is unspooled therefrom and conveyed with the mat 332 over the roller 625. The carrier material 630 travels with the mat 332 as the mat 332 wraps around a major portion of the roll core outer surface 322. In this manner, the carrier material 630 acts to support the dry glass fibre mat 332 and assure a tight wrap over the roll core outer surface 322. The carrier material 630 is directed away from the roll core outer surface 322 by a second roller 640 and is taken up on roller 645. No preheating of the roll core outside surface is necessary.

Referring now to Figs. 21 and 22, the length of the inside layer 600, measured from its leading edge 600a to its trailing edge 600b, is approximately equal to the circumference of the roll core outer surface 322 such that when the inner layer is applied thereon, its trailing edge 600b comes into abutting relation with its previously applied leading edge 600a. The abutment of edges 600a and 600b is shown in Fig. 22 at 600c. The second layer 605 is slightly greater in length than the inner layer 600 such that when the second layer is applied over the inner layer, its trailing edge 605b comes into abutting relation with its leading edge 605a. The abutment of the edges 605a and 605b is shown in Fig. 22 at 605c. Likewise, the third layer 610 is slightly greater in length than the second layer 605 such that when the third layer 610 is applied over the second layer 605, its trailing edge 61 0b comes into abutting relation with its leading edge 610a. The abutment of the edges 610a and 610b is shown in Fig. 22 at 610c. Likewise the abutment of the edges 615a and 615b of the outside layer 615 is shown in Fig. 22 at 615c. The leading and following edges 615a and 615b of the outside layer 615 are affixed to each other by any suitable means, e.g., stitching. By wrapping in this manner, the abutting seam of each layer 600c, 605c, 610c and 615c are spaced evenly away from each other around the roll core outer surface 322 rather than being stacked atop top one. Stacking of the stitched seams on top of one another may result in an irregularity forming on the outer layer thickness of the finished roll core. The resulting reinforced fibre mat 332 is between 0.25 and 0.32 inches in thickness and preferably 9 mm. (0.30 inches) in thickness.

As shown in Figs. 20 and 21, the layers 600 and 605 of the dry glass fibre mat are each formed of a two-ply construction. That is, the inner layer 600 is formed of a first ply 601 of densely packed glass fibres arranged in a random pattern and a second ply 602 of densely packed unidirectional glass fibres that are parallel to each other and oriented perpendicular to the central axis of the roll core 320. The second layer 605 is formed of a first ply 607 of densely packed glass fibres arranged in a random pattern and a second ply 608 of densely packed unidirectional glass fibres that are parallel to each other and oriented parallel to the central axis of the roll core 320. By including glass fibres that are linear and oriented in parallel and perpendicular directions with respect to the central axis of the roll core, the glass fibre mat 332 provides enhanced tensile strength in the direction of the roll core central axis and over the circumference of the roll core. The third layer 610 and outside layer 615 are both formed of a single ply of densely packed glass fibres arranged in a random pattern.

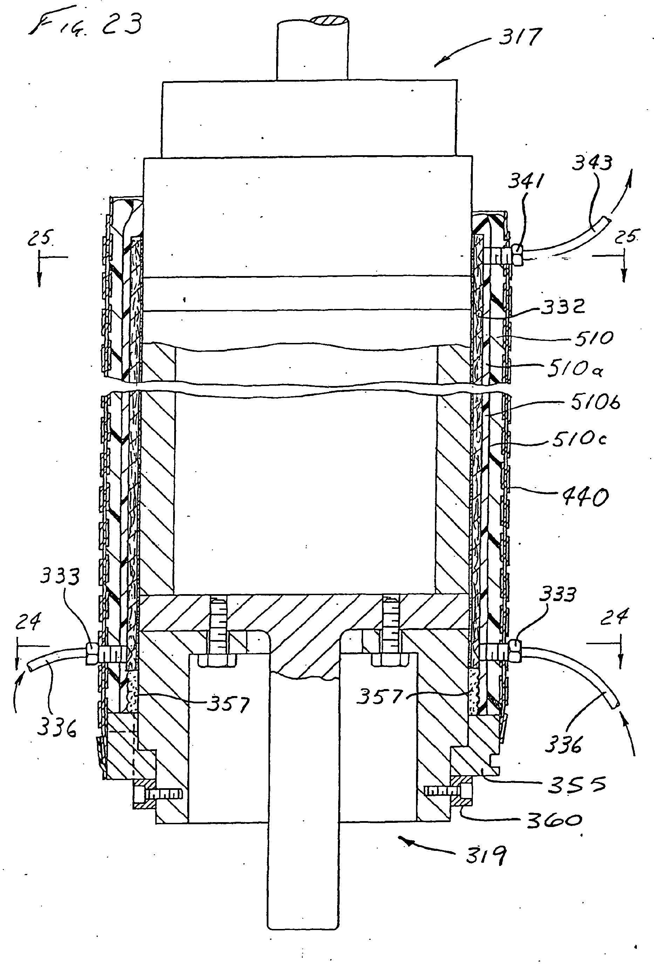

Next, as best shown in Fig. 23, the spacer ring 355 is slidably mounted over the extension segment located at the roll core bottom end 319 utilizing the locking ring 360 in the manner previously described. A length of sealant 357 is applied to the extension segment 340 proximate the roll core lower end 319 between the lower edge of the glass fibre mat layer 332 and the spacer ring 355. The sealant 357 is provided to prevent the leakage of epoxy resin during the infusion process to be described below. The roll core 320 with the mat wrapped thereover is then located within the apparatus 10 and held vertically between the opposed chucks 230 and 325 in the elevated position in the manner previously described.

As mentioned previously, a roll core not having a glass fibre mat 325 wrapped thereover could be disposed between the chucks 230 and 325 for application of a polymeric layer directly to the outer surface of the roll core. In such a case it is necessary to conduct a heating step prior to locating the roll core vertically between the opposed chucks 230 and 320. The entire roll core 320 is placed in an oven 321 (Fig. 1) and preheated until the outer surface 322 (Fig. 22) thereof and the extension segments 340 reach a predetermined temperature, e.g., 96°C to 280°C (95° to 550° F). Once the outer surface has reached the predetermined temperature, the roll core is removed from the oven 321 and located in the apparatus 10 and held vertically between the opposed chucks 230 and 325 in the elevated position in the manner previously described.

Next a "start-up process" is performed for two purposes: (1) to apply a predetermined amount of tension to the mold tape 440; and, (2) to stabilize the polymeric material being extruded from the feeding head 411 of the extruder assembly 410 to assure a proper rate of extrusion during rotation of the turntable 400. The start-up is performed prior to application of the polymeric material over the dry glass fibre mat layer 332. Generally speaking, during start-up, the turntable 400 and the extruder assembly 410 mounted thereto are rotated around the non-rotating roll core while the elevator is prevented from descending. Filament, extruded from the extruder head 411, drops through the opening 356 in the spacer ring 355 which is rotating with the turntable 400 and extruder assembly 410.

Referring now to Fig. 19, to perform the "start-up", a leading edge of the mold tape assembly 440 is unspooled from the mold tape dispenser 430 (Fig. 1) and is attached to the outer surface of the spacer ring 355 by any suitable means, e.g., high temperature adhesive tape 445. The leading edge of the mold tape assembly 440 extends over the opening 356 which forms as an integral part of the spacer ring 355. Rotation of the turntable 400 is started while elevator assembly 185 is stationary and with the roll core 320 being non-rotational and raised. During the start-up procedure, it is important that the mold tape 440 does not begin the helical winding process.

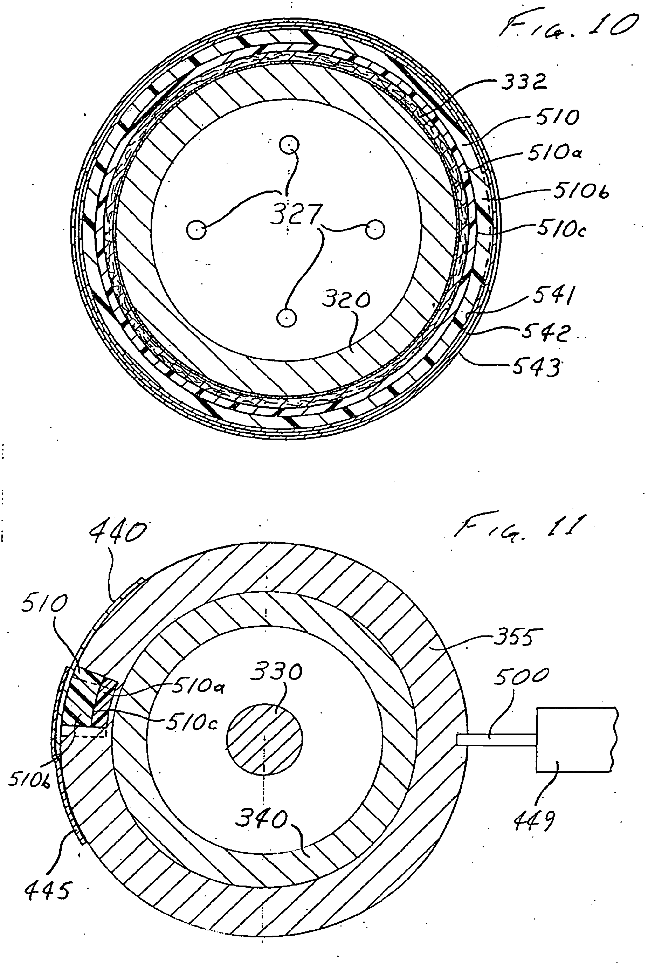

Referring now to Figs. 9 and 11, during the start-up, it is important that the mold tape assembly 440 does not wind onto itself. To prevent this from happening, the spacer ring 355, to which the leading edge of the mold tape assembly 440 is attached, must rotate with the turntable 400 while the roll core 320 remains non-rotational. To enable slidable rotation of the spacer ring 355 during the start-up, the spacer ring 355 is provided with a bore 495 in its sidewall that is aligned with and receives a pin 500 mounted on the turntable-mounted indexing pin device 449. During the start-up procedure, the indexing pin device 449 indexes the pin 500 from a retracted position (best shown in Fig. 9) wherein the pin 500 is withdrawn from the bore 495, to an extended position (best shown in Fig. 11) wherein the pin 500 is inserted into the bore 495. The indexing pin device 449 is driven by compressed air delivered by an air compressor 447 (best shown in Fig. 2), also mounted on the turntable 400 and is activated in synchronization with the start of elevator movement. When the pin 500 is inserted within the bore 495 of the spacer ring 355 (Fig. 11), it causes the spacer ring 355 to slidably rotate with respect to the roll core outer surface 322 as the turntable 400 rotates. In this manner, during the start-up procedure, the mold tape assembly 440, with its leading edge attached to the spacer ring 355 is prevented from winding onto the spacer ring 355.

With the mold tape assembly 440 extending over the opening 356 (best shown in Figs. 11 and 19), an enclosure is created having an open top and an open bottom and an outer side wall created by the mold tape assembly 440. The feeding head 411 of the extruder assembly 410 is positioned directly over the open top of the opening 356. Because the pin 500 is inserted in the bore 496, during the start-up procedure, the opening 356 remains positioned directly under the extruder feeding head 411 as the turntable 400 rotates. In this manner, while the feeder head 411 is adjusted to attain the proper feed rate during rotation, the polymeric material 510 is extruded through the opening 356 instead of being allowed to pile up against the dry glass fibre mat layer 332 (or against the metal roll core outer surface 322 if there is no dry glass fibre mat). Once the predetermined mold tape tension has been reached and both the turntable 400 and the extrudate from feeder head 411 have reached stable rates, the start-up procedure is complete, and a polymeric layer may be built by winding over the dry glass fibre mat layer 332 (or against the metal roll core outer surface 322 respectively). The start-up procedure needs only two to four revolutions.

Referring now to Figs. 2 and 9, to build the polymeric layer 510, the pin 500 is withdrawn from the spacer assembly bore 495 and the spacer ring 355 is locked down to the extension segment 340 by, e.g., taping. The turntable 400 is activated. Since the spacer ring 355 is affixed to the extension segment, as the turntable 400 rotates, the mold tape assembly 440 unspools. Simultaneously, the motor driven elevator assembly 185 is activated which causes the roll core 320 to be slowly lowered from the elevated position a suitable speed, e.g., 12mm (0.50 inches) per revolution, and is determined by the dimension of the extrusion profile. Rotation of the turntable 400 causes the mold tape dispenser 430 to travel a circular path around the roll core 320 and wind the mold tape assembly 440 around the spacer ring 355 on the roll core 320. As best seen in Figs. 2 and 9, lowering of the roll core 320 by the elevator assembly 185 causes the mold tape assembly 440 to be wound helically in an overlapping manner over the length of the dry glass fibre mat layer 332 from the bottom 319 to the top 317 thereof. The amount of overlap, e.g., approximately 12mm. (0.5 inches), is determined by the rate of downward movement of the roll core 320, e.g., 12mm (0.50 inches) per rotation and the width of tape used, e.g., 25.4mm (one inch). The resulting filament 510 is of sufficient thickness, e.g., approximately 14mm (0.65 inches), to enable the covered roll to machined down to a thickness desired by the customer, e.g., between 12mm. and 10mm. ( 0.50 and 0.40 inches) in thickness.

Where the polymeric layer 510 is applied directly to the outer surface 322 of the roll core 320 it is necessary to preheat the roll core outer surface 322. This may be done by an induction heater 420 (Fig. 3) mounted on the turntable which provides localized heating to a temperature according to the polymeric material used, e.g., approximately 700°C (750°F). The preheating is applied just prior to application of the extruded thermoplastic filament 510 thereon. The localized heating is applied approximately 6mm (1/4 inches) from the roll core outer surface 322.

The localized heating is only to a shallow skin depth on the roll core outer surface, e.g. a total depth of approximately 4mm (0.15 inch) below the metal shell outer surface. Localized heating of the metal shell improves adhesion between the molten polymer and metal surface. The remaining mass of the roll core slowly absorbs heat from the surface. The heat acts as a brake and prevents the cooling process from occurring too quickly as the polymeric cover approaches its glass transition temperature (T_{g}) By prolonging the period at which the temperature of the filament 510 is maintained near but not below the glass transition temperature (Tg), an effective annealing process results that reduces residual stresses in the filament 510 dramatically. Also, because the under layer 510a comprises a higher fibre content than the top stock 510b, residual stresses are further reduced during cooling due to a smaller difference in the coefficient in thermal expansion (CTE) between the metal shell and the under layer 510a, and between the under layer 510a and the top stock 51 0b. Stress buildup in the extruded filament 510 due to thermal shrinkage is minimized because cooling is gradual and extends through the bonding interface 510c towards the outside of the top stock 510b. Thus, this localised heating reduces residual stresses to the extruded filament 510 thus minimizing the possibility of cracking of the plastic cover. Localized heating also improves adhesion quality of the filament 510 to the roll core outer surface 322.

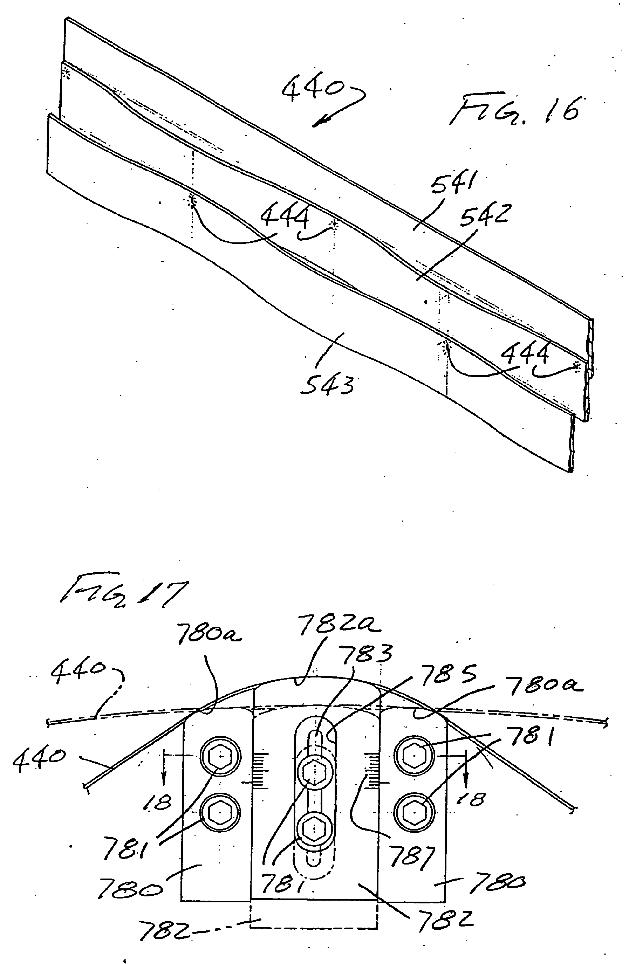

As best shown in Figs. 8 and 16, the mold tape assembly 440 may be formed of any suitable material, e.g., stainless steel, and comprises a plurality of ribbons, i.e., an inner ribbon 541, an intermediate ribbon 542 and an outer ribbon 543. Each ribbon may be 10mm (0.4 inches) high, and 0.025mm (0.005 inches) thick. The ribbons are joined to one another in an overlapping manner by, e.g., tack welds 444, to form a three-tiered construction. The zone of overlap between the inner ribbon 541 and the intermediate ribbon 542 and between the intermediate ribbon 542 and the outer ribbon 543 may be of any suitable amount, e.g., 2mm (0.1 inches). The ribbons are tack welded to each other such that the resulting mold tape assembly 440 is arcuate in shape or curved at a predetermined radius of curvature over its length (best shown in Fig. 8) that is approximately equal to the circumference of the spacer ring 355, e.g., between 8.8cm and 7.6cm. (5 inches and 30 inches). As illustrated in Fig. 16, if the arcuately formed mold tape assembly 440 were straightened or flattened, the ribbon 542 between tack welds 444 would have a wavy appearance due to the fact that it was tack welded to ribbon 541 while maintained at a radius of curvature. Similarly, the ribbon 543 between tack welds 444 would have a wavy appearance due to the fact that it was tack welded to ribbon 542 while maintained at a radius of curvature.

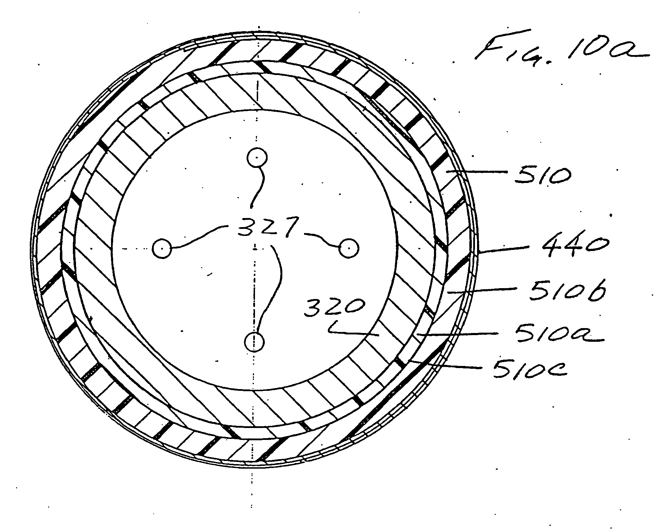

The mold tape assembly 440 is fabricated as having a built-in arc or radius of curvature, as it is dispensed, it tends to wind onto itself to form a helix. Referring now to Fig. 9a, there is shown three exemplary windings of a three-tiered mold tape assembly 440. The windings shown therein include a first winding comprising an inner ribbon 541 a, an intermediate ribbon 542a and an outer ribbon 543a; a second winding comprising an inner ribbon 541b, an intermediate ribbon 542b and an outer ribbon 543b; and a third winding comprising an inner ribbon 541c, an intermediate ribbon 542c and an outer ribbon 543c. As shown in Fig. 9a, the outer ribbon of the second winding 543b touches and overlaps the intermediate ribbon of the first winding 542a; the intermediate ribbon of the second winding 542b touches and overlaps the inner ribbon of the first winding 541a; and the outer and intermediate ribbons of the third winding, i.e., 543c and 542c, respectively, touch and overlap the intermediate and inner ribbons of the second winding, i.e., 542b and 541b, respectively. Also, as best shown in Fig. 9a, the amount of overlap from one winding to the next can be controlled by controlling the speed at which the roll core is lowered by the elevator assembly 185. Thus, as shown in Figs. 9, 9a and 10, as the mold tape assembly 440 is wound, it results in a three-tiered cylindrical shape comprising the inner ribbon 541, the intermediate ribbon 542 and the outer ribbon 543. The tape 440 formed of a two-tier construction shown in Fig. 96, when wound as described in connection with the three-tier construction, results in a cylindrical shape. The cylindrically shaped mold tape assembly 440 surrounds the fabric covered roll core in spaced relationship to form a weir or application zone 505 in which a filament 510 of polymeric material may be extruded (best shown in Fig. 9). The application zone 505 is defined by the space between the inside surface of the helically wound mold tape assembly 440 and the outside surface of the dry glass fibre layer 332 or the outside surface of the metal roll core 322.

While the mold tape 440 forms the application zone 505, the extruder assembly 410 extrudes the filament 510 of polymeric onto the glass fibre layer 332 (or outside surface of the roll core where no glass fibre layer 332 is employed). As discussed above, the filament 510 may be formed of a dual layer construction comprising a high glass content under layer and a lower glass outer layer. The mold tape 440 acts as a supportive form to prevent sagging of the filament 510 prior to hardening. It also defines the outside diameter of the filament 510. Rotational movement of the turntable 400 causes the extruder assembly 410 to travel in a circular path around the roll core 320. That, combined with the slow lowering of the fabric covered roll core 320 from the elevated position to the lowered position within the central opening 180 causes the continuously extruded filament 510 to be helically wound first onto the outer surface of the extension segment 340 located at the roll core bottom 319. The first winding of the filament 510 is supported by the spacer ring 355. Subsequent windings of the filament 510, are supported by the previous layer wound during the previous rotation. Subsequent windings of the filament 510 are wound onto the glass fibre layer 332 from bottom to top and, thereafter, onto the extension segment 340 located at the roll core top 317.

Thus, a glass fibre mat 332 having a very low thermal conductivity coefficient and a high temperature resistance capability prevents excessively rapid cooling and also prevents the build-up of residual stresses and cracking of the filament 510 during cooling.

The filament 510 may be extruded at a predetermined thickness that is suitable to the customer, e.g., between 7mm. to 25.4mm. (0.300 inch to 1.000 inch) using different feeding heads 411. As best shown in Fig. 3, in order to apply filament 510 to different sizes of roll core, the extruder assembly 410, induction heater 420 and mold tape dispenser 430 are all mounted to a moveable platform 512 that is moveably secured within a plurality of elongated slots 514 located on the turntable 400. In this manner, the platform 512 may be moved along the elongated slots 514 to adjust the distance of the platform mounted devices from the roll core outer surface 322 thus enabling positioning of the filament 510 prior to application to the dry glass fibre layer 332 or roll core outer surface 322.

As mentioned previously, during helical winding of the filament 510; the roll core 320 remains non-rotational while the extruder assembly 410 is rotated therearound instead of rotating the roll core 320 and keeping the extruder assembly 410 and other turntable mounted devices stationary. This method avoids undesirable build-up of centrifugal forces that would tend to propel the extruded filament 510 away from the roll core outer surface 322 during helical winding thereby impairing the bonding of the extruded filament 510 to the dry glass fibre layer 332. This centrifugal force becomes detrimental when covering very large sized roll cores with relatively low viscosity or slow set-up resin materials at high production rates, i.e. high rotational speed. Application of the continuous filament 510 onto the roll core 320 in a vertical orientation also utilizes gravitational force to pack down the filament 510 onto the supporting layer.

Next, the covered roll core is allowed to cool while housed within the central opening 180. (Alternatively, the covered roll core may be removed from the apparatus 10 and placed in an oven or other thermally insulated chamber to control the rate of cooling of the covered roll core.)

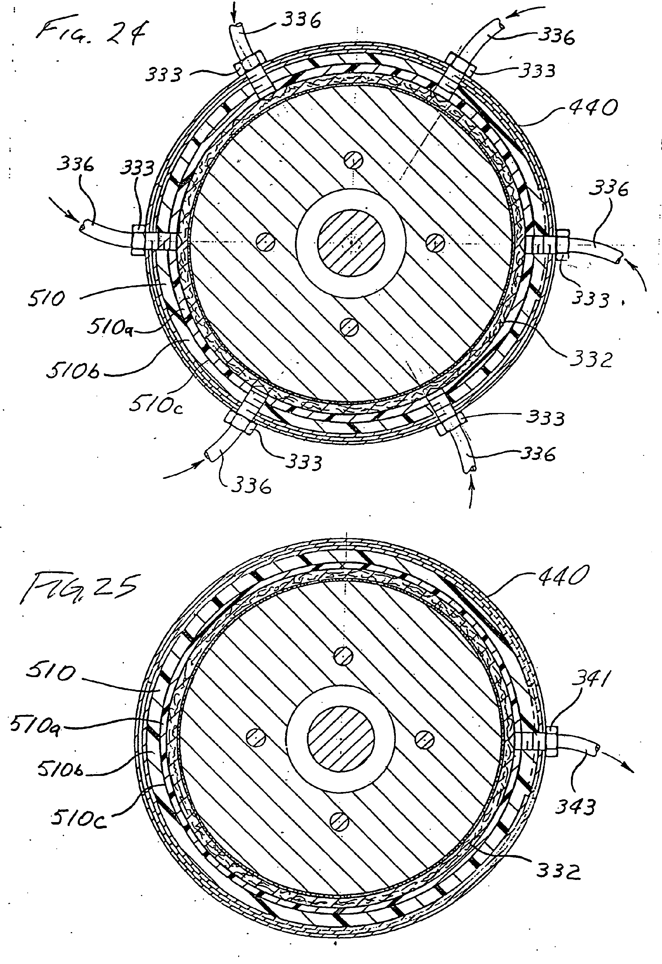

Where a glass fibre mat underlayer is present, once cooling is complete, the roll core is prepared for the infusion of epoxy resin into the densely wrapped glass fibre mat layer 332 by drilling holes through the mold tape 440 and the polymeric layer 510 into the interior of the glass fibre mat layer 332. As best shown in Figs. 23 through 25, entrance holes are drilled proximate the roll core bottom 319 (best shown in Figs. 23 and 24) at the locations shown therein and valves 333 are inserted therethrough. The valves 333 are each connected to lines 336 through which the epoxy resin is fed. A similar valve 341 is inserted through a vacuum hole drilled proximate the roll core top 317. The vacuum valve 341 is connected to a vacuum source by a vacuum line 343 and a vacuum is drawn. The epoxy resin is fed through the entrance valves 333 and infuses through the glass fibre layer 332.

The previously applied sealant 357 prevents the epoxy resin from leaking downwardly over the extension segment 340 located proximate the bottom end of the roll core 319. Maintaining the level of the vacuum valve 341 above that of the entrance valves 333 assures that air bubbles within the glass fibre mat 332 will escape through the vacuum valve 341 during epoxy resin infusion. Eventually, the epoxy resin seeps out of the vacuum valve 341. When this occurs, all valves 333 and 341 are closed. The epoxy resin is then allowed to gel.

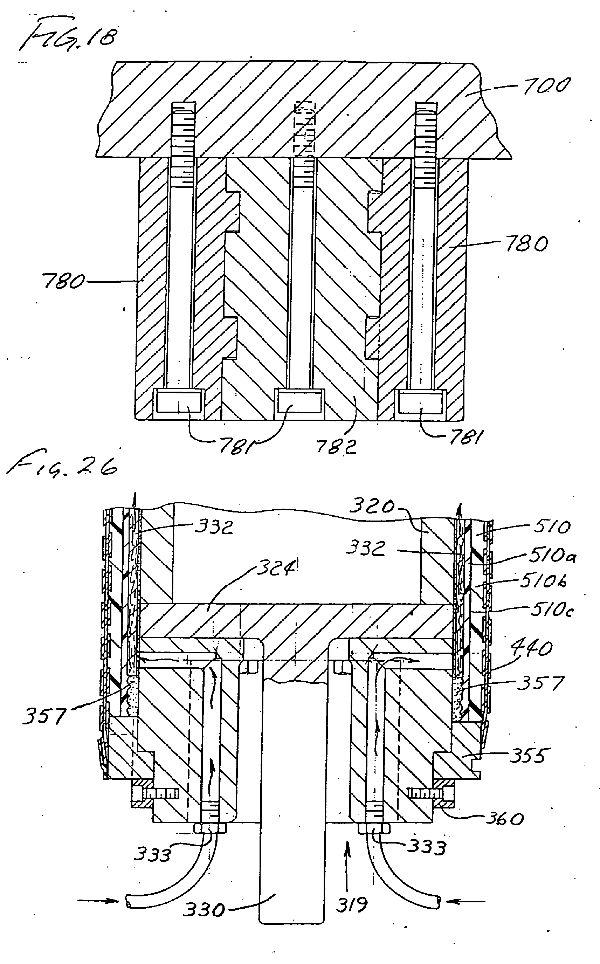

Fig. 26 illustrates another method for preparing the roll core for the infusion of epoxy resin into the glass fibre mat layer 332. In this method, passage holes are drilled through the extension segment 340 located proximate the roll core bottom 319 and into the interior of the glass fibre mat layer 332 just above the location of the sealant 357 and valves 333 are inserted therethrough. Then the covered roll core with mold tape 440 wrapped thereon may be removed from the apparatus 10 and place horizontally in an oven for curing of the epoxy resin while being rotated.

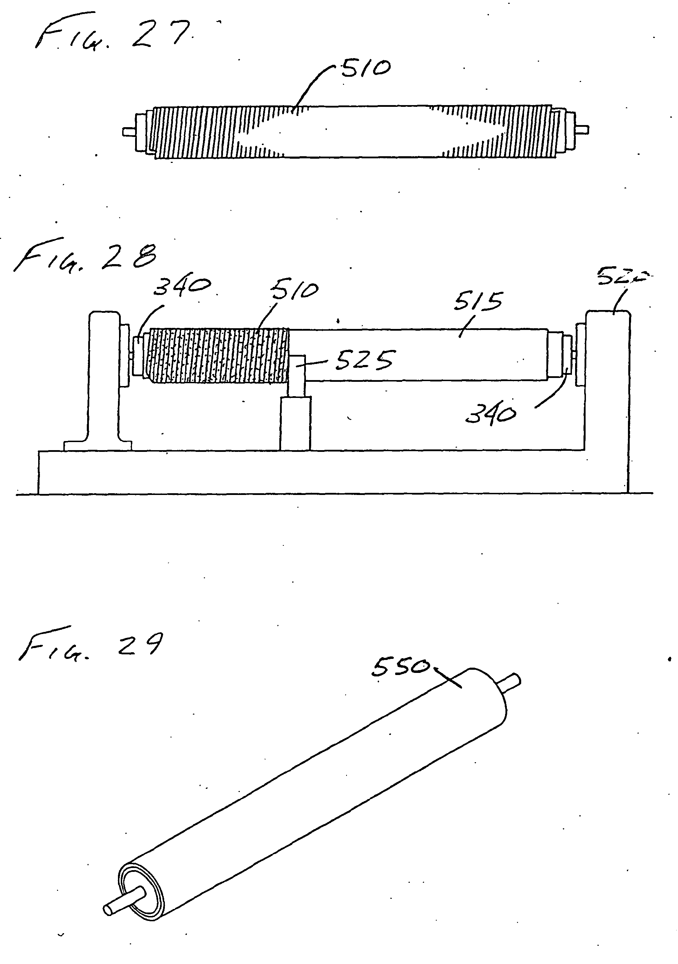

Next, the mold tape 440 is unwrapped from the outer surface of the polymeric material 510. As best shown in Fig. 27, the layer of polymeric material 510 has a roughened surface. This is machined to a desired smoothness by placing the covered roll core horizontally on a lathe 520 and machining the outer surface of the polymeric layer 510 to a predetermined smoothness 515 utilizing a suitable cutting tool 525 as shown in Fig. 28.

The next part of the process is to cut through the layer of polymeric material 510 down to the roll core outer surface 322 and remove the two extension segments 340 at the ends thereof. The edges may be treated to form a slight bevel (not shown), to obtain a finished roll that may be returned to the customer. The finished covered roll is shown at 550 in Fig. 29 with the extension segments 340 and spacer assembly 350 removed. A typical covered roll with a dimension of 51cm (20 inches) in diameter and 3.81m. (150 inches) of the present invention possesses a combination of improved performance characteristics including: a surface roughness of between 0 ~ 2 Ra micro inch attainable, a Young's modulus between 3.2 - 4.8 x 10⁶ kgm⁻² (650,000 and 1,000,000 psi), a cover hardness between 87 to 93 Shore D, and a glass transition temperature, T_{g}, of approximately 220°C (430° Fahrenheit).

Representative calender rolls which may be treated in accordance with the present invention range in length between 2.54m (100 inches) and 7.64m (300 inches) and range in diameter between 25.4cm (10 inches) and 91.4cm (36 inches) after application of the cover material to the roll core. Typically, rolls for fabricating magnetic tape range in length between 25.4cm (10 inches) and 101.6cm (40 inches) and range in diameter between 12cm (6 inches) and 50.8cm (20 inches) after application of the cover material to the roll core. (The lengths and diameters mentioned above are merely exemplary.) The roll cores may be useful in textile manufacturing and may have dimensions falling outside these ranges.

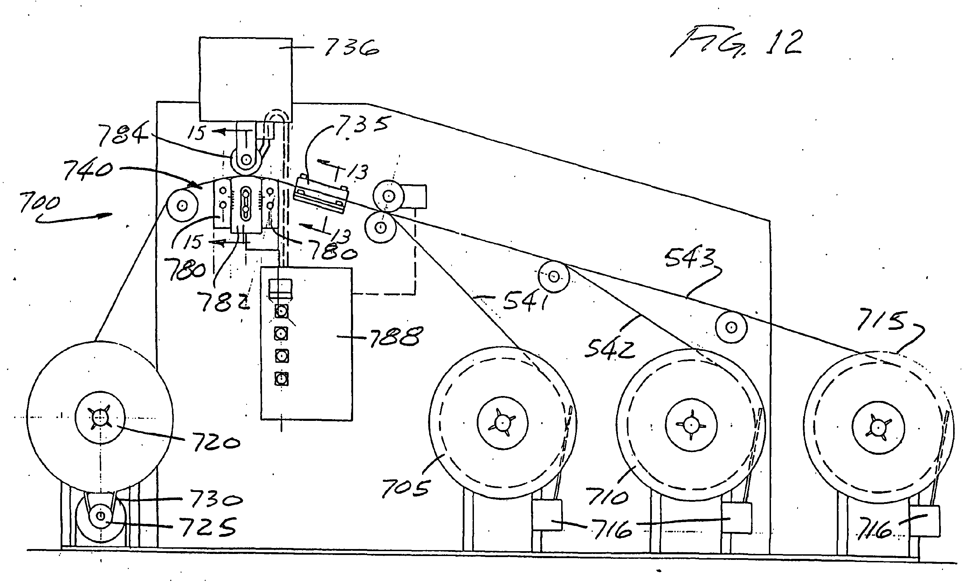

In Fig. 12, there is shown an apparatus 700 for fabricating the multi-tiered mold tape assembly 440. The apparatus 700 comprises dispensing spools 705, 710 and 715 each having a respective single ribbon wound thereon. A take-up wheel 720, linked to a motor-driven drive pulley 725 by means of a drive belt 730, draws the single ribbons 541, 542 and 543 simultaneously from their respective dispensing spools 705, 710 and 715 and conveys them at a continuous rate of speed through an alignment assembly 735 and onto the surface of a curvature shoe 740. The curvature shoe 740 maintains the ribbons in an arcuate position while a welding device 736 positioned thereover tack welds the ribbons together intermittently as they pass thereunder resulting in a mold tape assembly 440 having a predetermined radius of curvature. Each of the dispensing spools 705, 710 and 715 is provided with a brake assembly 716 to enable tension adjustment of the ribbons during the fabrication of the mold tape assembly 440. The resulting mold tape assembly 440 is wound onto the take-up wheel 720. The take-up wheel 720 with the finished mold tape assembly 440 spooled thereon may be removed from the apparatus 700 and mounted onto the turntable mounted mold tape dispenser 430.

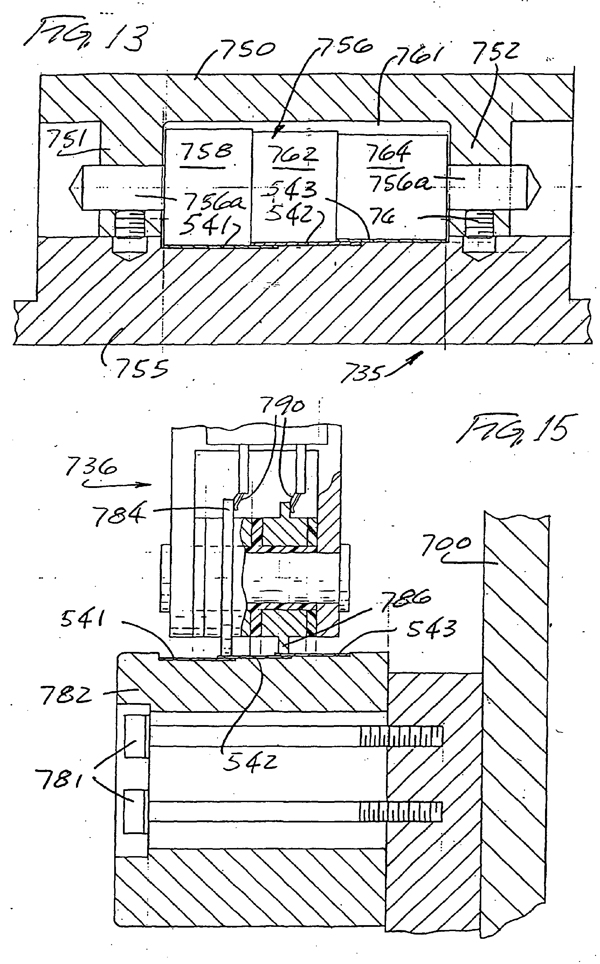

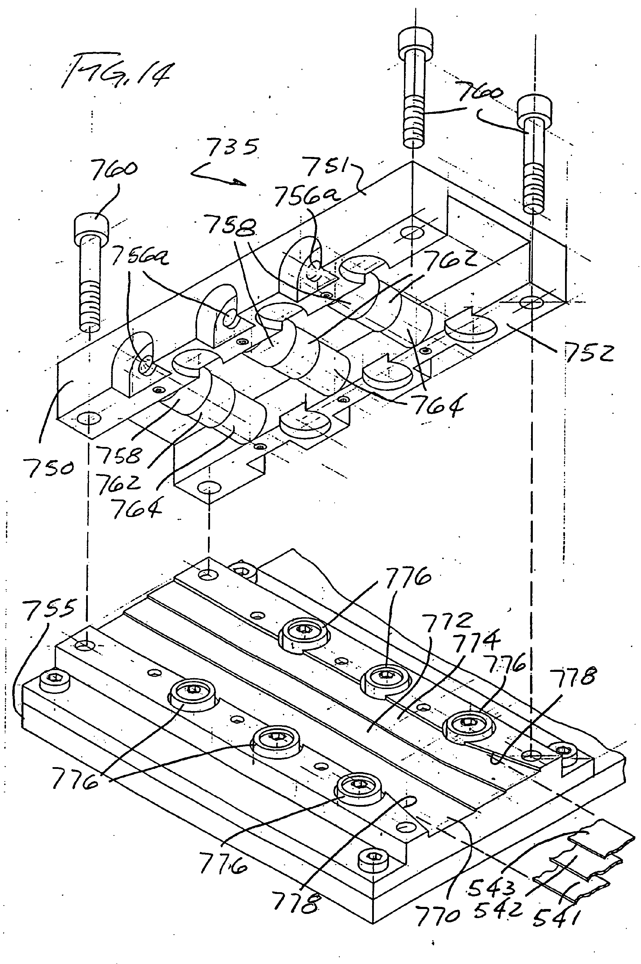

Referring now to Figs. 13 and 14, the alignment assembly 735 is provided for simultaneously receiving the single ribbons 541, 542 and 543 from each of the dispensing spools 705, 710 and 715 and aligning the single ribbons with respect to each other in a substantially parallel and partially overlapping orientation as they are passed therethrough to form the mold tape assembly 440 shown in Fig. 8. The alignment assembly 735 comprises an upper portion 750 and a lower portion 755 that may be secured together by bolts 760, to form an enclosed channel 761 as best seen in Fig. 13. The lower portion 755 of the alignment assembly 735 includes a groove 770, a first ledge 772 located above the groove 770 and a second ledge 774 located above the first ledge 772 that together form a floor of the enclosed channel 761. The groove 770 is dimensioned to accommodate the entire width and thickness of the inner ribbon 541 as the ribbon passes through the enclosed channel 761. The first ledge 772 is sized to accommodate only a portion of the width of the intermediate ribbon 542., the remaining width of the intermediate ribbon 542 partially overlying the inner ribbon 541 as it passes through the enclosed channel 761. The second ledge 774 is sized to accommodate only a portion of the width of the outer ribbon 543, the remaining width of the outer ribbon 543 partially overlying the intermediate ribbon 542 as it passes through the enclosed channel 761.

The upper portion 750 additionally comprises opposed walls 751 and 752 that extend downwardly. The wall 751 includes a plurality of, e.g., three, through openings that are aligned with a plurality of, e.g., three, through openings located on the opposing wall 752 to hold rollers between the walls and within the enclosed channel 761 in a parallel relationship. Each roller includes a central axle 756a and has a first shoulder 758, a second shoulder 762 and a third shoulder 764, the first shoulder 758 being slightly larger in diameter than the second shoulder 762, and the second shoulder 762 being slightly larger in diameter than the third shoulder 764. The first shoulder 758 is disposed within the channel 761 in a spaced-apart relationship with the groove 770 to allow only the passage of the inner ribbon 541 therebetween. The second shoulder 762 is disposed within the channel 761 in a spaced relationship with the first ledge 772 to allow only the passage of the intermediate ribbon 542 therebetween. Likewise, the third shoulder 764 is disposed within the channel 761 in a spaced relationship with the second ledge 774 to allow only the passage of the outer ribbon 543 therebetween. In this manner, the alignment assembly 735 assures proper alignment of the ribbons 541, 542 and 543 in a substantially parallel and overlapping orientation during welding to form the mold tape assembly 440. The lower portion 755 is also provided with guide rollers 776 to facilitate passage of the ribbons through the enclosed channel 761. Additionally, a V-shaped entrance 778 is provided on the lower portion 755 for receiving the single ribbons 541, 542 and 543 and guiding them through the alignment assembly 735.

A curvature shoe 740, shown in Figs. 15, 17 and 18, supports the single ribbons 541, 542 and 543 at a predetermined radius of curvature while they are conveyed thereover and tack welded together by the welding device 736. The curvature shoe 740 comprises a pair of spaced fixed elements 780 and an adjustable element 782. Each fixed element 780 includes a rounded top surface 780a for supporting aligned ribbons 440 while they are conveyed thereover. As best shown in Fig. 18, the fixed elements 780 are affixed to the apparatus 700, e.g., by bolts 781. Referring again to Fig. 17, the adjustable element 782 between the fixed elements 780 and includes a rounded top surface 782a for supporting aligned single ribbons 440 for conveyance thereover during welding. As best shown in Fig. 18, the adjustable element 782 is affixed to the apparatus, e.g., by bolts 781. As best shown in Fig. 17, the adjustable element 782 includes a vertically oriented slot 783 that is located within a recess 785. The bolts 781 are within the recess 785 and through the slot 783 in a manner that enables vertical movement of the adjustable element 782 from a lowered position (shown by phantom lines in Fig. 17) through a number of adjusted positions to an elevated position (shown in solid lines in Fig. 17). In the lowered position, the aligned ribbons 440 (shown by phantom lines in Fig. 17) extend across the top surfaces of the fixed and adjustable heads 780a and 782a and are maintained thereon at a maximal radius of curvature. Additionally, indicia 787 are provided on the fixed and adjustable elements 780 and 782 to enable a user to accurately obtain a desired radius of curvature of the mold tape 440. By tack welding the ribbons together while disposed over the curvature shoe, the ribbons are affixed together at a desired radius of curvature to form the mold tape assembly 440. In the elevated position, the aligned ribbons 440 (shown in solid lines in Fig. 17) extend across the top surfaces of the fixed and adjustable heads 780a and 782a and are maintained thereon at a tight radius of curvature. Upon tack welding the ribbons together, the resulting mold tape assembly 440 will maintain this radius of curvature.

The welding device 736 has circular welding heads 784 and 786 that are in electrical contact with a voltage/current source 788 (Fig. 12) through electrical contact brushes 790. The welding head 784 contacts the intermediate ribbon 542 in the area it lies over the inner ribbon 541. Likewise, the welding head 786 contacts the outer ribbon 543 in the area it lies over the intermediate ribbon 542. As the ribbons 541, 542 and 543 are conveyed over the curvature shoe, the welding heads 784 and 786 rotate while remaining in contact therewith. A periodic voltage/current is provided from the voltage/current source 788 through the welding head 784 which causes the ribbons 542 and 541 to become affixed to each other by a plurality of tack welds 444 (best shown in Fig. 8). Similarly, a periodic voltage/current is provided through welding head 786 which causes the ribbons 543 and 542 to become affixed to each other by a plurality of tack welds 444 (also best shown in Fig. 8). Alternatively, the adjustable element 782a of the curvature shoe 740 in the present invention can be replaced by using a roller of which its face is machined accordingly to support the plurality of aligned single ribbons 440 for conveyance thereover during welding.

Referring now to Figs. 2 and 9, a roll core 320, having the glass fibre mat 332 wrapped thereover, is disposed between the chuck 230 and chuck 325. The present invention also clearly contemplates use of the apparatus described herein for covering a metal roll core with a polymeric material only, the polymeric material being applied directly to the outer surface of the roll core with no fibre mat under layer being disposed therebetween. Such a roll core with polymeric material being applied directly to its outer surface without a fibre mat under layer is illustrated in Fig. 10a. Thus, under the present invention, a roll core not having a glass fibre mat 325 wrapped thereover could be disposed between the chucks 230 and 325 for application of a polymeric layer directly to the outer surface of the roll core in accordance with this invention. When placed within the apparatus 10 in this vertical orientation, the roll core comprises a top end 317 and a bottom end 319.

Before insertion the core is wrapped with a dry glass fibre mat layer 332 over its outer surface.

The present invention is not limited to the fabrication of roll core covers that include a resin-infused fibre mat under layer, such as shown in Fig. 9.

The invention is not limited to the embodiment shown. The cover can be any thermoplastic, preferably a high performance thermoplastic material. The reinforcement fibre mats are preferably glass fibres, carbonfibres, aramid fibres (e.g. KEVLAR) or other mineral or metallic high strength fibres. The apparatus may be used to apply other coatings to other substrates.

## Claims

1. A method of forming a roll device for use in calendaring, the method comprising the steps of:
a) mounting a generally cylindrical roll core such that its principal axis is vertical;
b) extruding thermoplastics material having fibre reinforcement disposed therein from an extrusion head (411) on to the roll core (320) to form a cover,
c) allowing said extruded thermoplastics material to cool, wherein said fibre reinforcement consists of discrete, randomly-oriented fibres.

2. A method according to Claim 1, comprising the preliminary step of wrapping a fibre mat around the roll core prior to mounting it.

3. A method according to Claim 1 or 2, further comprising the step of machining the cooled outer surface of the thermoplastics material to a predetermined smoothness.

## Patentansprüche

1. Verfahren zur Bildung einer walzenvorrichtung für die Verwendung beim Kalandrieren, umfassend die Schritte:
a) Montieren eines im Allgemeinen zylindrischen Walzenkerns, so dass seine Hauptachse vertikal ist;
b) Extrudieren eines thermoplastischen Materials mit einer darin angeordneten Faserverstärkung aus einem Extrudierkopf (411) auf den Walzenkern (320) um eine Bedeckung zu bilden,
c) Abkühlenlassen des extrudierten thermoplastischen Materials,
wobei die Faserverstärkung aus diskreten, zufällig orientierten Fasern besteht.

2. verfahren gemäß Anspruch 1, umfassend den Zwischenschritt; Umwickeln des Walzenkerns mit einer Fasermatte vor seiner Montage.

3. Verfahren gemäß Anspruch 1 oder 2, ferner umfassend den Schritt: Bearbeitung der abgekühlten äußeren Oberfläche des thermoplastischen Materials auf eine vorbestimmte Glätte.

## Revendications

1. Procédé de fabrication d'un dispositif de rouleau destiné à une utilisation de calandrage, le procédé comprenant les étapes consistant à :
a) monter un coeur de rouleau généralement cylindrique de sorte que son axe principal soit vertical ;
b) extruder un matériau thermoplastique ayant un renfort de fibres disposé à l'intérieur à partir d'une tête d'extrusion (411) sur le coeur de rouleau (320) pour former un revêtement ;
c) laisser refroidir ledit matériau thermoplastique extrudé ;
où ledit renfort de fibres consiste en fibres discrètes orientées de manière aléatoire.

2. Procédé selon la revendication 1, comprenant l'étape préliminaire consistant à enrouler un mat de fibres autour du coeur de rouleau avant son montage.

3. Procédé selon la revendication 1 ou 2, comprenant l'étape consistant à usiner la surface extérieure refroidie du matériau thermoplastique à un poli prédéterminé.
